(19)

Europäisches
Patentamt

European
Patent Office

Office européen
des brevets

(11) **EP 1 901 421 A1**

(12) **EUROPÄISCHE PATENTANMELDUNG**

(43) Veröffentlichungstag:
**19.03.2008 Patentblatt 2008/12**

(51) Int Cl.:
***H02P 6/18*** *(2006.01)* ***H02P 21/14*** *(2006.01)*

(21) Anmeldenummer: **06405391.1**

(22) Anmeldetag: **13.09.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(71) Anmelder: **ABB Schweiz AG**
**5400 Baden (CH)**

(72) Erfinder:
 • **Harder, Thorsten**
  **5322 Koblenz (CH)**

 • **Beiser, Dirk**
  **5300 Ennetturgi (CH)**
 • **Conticelli, Fabio**
  **5405 Dättwil (CH)**
 • **Bohren, Patrick**
  **5600 Lenzburg (CH)**

(74) Vertreter: **ABB Patent Attorneys**
**c/o ABB Schweiz AG,**
**Intellectual Property (CH-LC/IP),**
**Brown Boveri Strasse 6**
**5400 Baden (CH)**

(54) **Verfahren zum Bestimmen der Rotorwinkelposition einer rotierenden elektrischen Maschine**

(57)   Es wird ein Verfahren zum Bestimmen der Rotorwinkelposition einer rotierenden elektrischen Maschine angegeben, welche Maschine einen Statorwicklungssatz mit mindestens drei Statorwicklungen aufweist, wobei der Statorwicklungssatz von einer Umrichtereinheit gespeist wird. Zunächst wird eine erste Spannung ($U_1$) mittels der Umrichtereinheit an den Statorwicklungssatz innerhalb eines ersten vorgebbaren Zeitraum ($t_{x1}$) angelegt und dazu ein erster Stromgradient ($\left.\frac{di}{dt}\right|_{U_1}$) ermittelt und eine zweite Spannung ($U_2$) mittels der Umrichtereinheit an den Statorwicklungssatz innerhalb des ersten vorgebbaren Zeitraum ($t_{x1}$) angelegt und dazu ein zweiter Stromgradient ($\left.\frac{di}{dt}\right|_{U2}$) ermittelt. Weiterhin wird eine dritte Spannung ($U_3$) mittels der Umrichtereinheit an den Statorwicklungssatz innerhalb eines zweiten vorgebbaren Zeitraum ($t_{x2}$) angelegt und dazu ein dritter Stromgradient ($\left.\frac{di}{dt}\right|_{U3}$) ermittelt und eine vierte Spannung ($U_4$) mittels der Umrichtereinheit an den Statorwicklungssatz innerhalb des zweiten vorgebbaren Zeitraum ($t_{x2}$) angelegt und dazu ein vierter Stromgradient ($\left.\frac{di}{dt}\right|_{U4}$) ermittelt. Aus dem ersten, zweiten, dritten und vierten Stromgradient ($\left.\frac{di}{dt}\right|_{U_1}$, $\left.\frac{di}{dt}\right|_{U_2}$, $\left.\frac{di}{dt}\right|_{3}$, $\left.\frac{di}{dt}\right|_{U_4}$) wird ein Teilrotorpositionswinkel ($\gamma$) ermittelt. Desweiteren wird die Statorspannung ($U_S$) am Statorwicklungssatz und der Statorstrom ($I_S$) am Statorwicklungssatz fortlaufend ermittelt und aus der Statorspannung ($U_S$) und dem Statorstrom ($I_S$) ein erstes Statorflusssignal ($\psi_1$) berechnet und aus dem Statorstrom ($I_S$) und einem Magnetisierungsfluss ($\psi_M$) des Statorwicklungssatzes ein zweites Statorflusssignal ($\psi_2$) berechnet. Darüberhinaus wird die Cosinuswinkelfunktion des ersten Statorflusssignals ($\psi_1$) und des zweiten Statorflusssignals ($\psi_2$) gebildet, wobei die Differenz aus der Cosinuswinkelfunktion des ersten Statorflusssignals ($\psi_1$) und der Cosinuswinkelfunktion des zweiten Statorflusssignals ($\psi_2$) gebildet wird. Falls die Differenz ausserhalb eines einstellbaren Toleranzbandes liegt, wird ein Korrekturphasenwinkel ($\psi_K$) zum Teilrotorpositionswinkel ($\gamma$) addiert.

EP 1 901 421 A1

Fig. 1

**Beschreibung**

**Technisches Gebiet**

Die Erfindung bezieht sich auf das Gebiet der Betriebsverfahren rotierender elektrischer Maschinen. Sie geht aus von einem Verfahren zum Bestimmen der Rotorwinkelposition bzw. Bestimmung des magnetischen Flusswinkels einer rotierenden elektrischen Maschine gemäss dem Oberbegriff des unabhängigen Anspruchs.

**Stand der Technik**

Eine heute gängige rotierende elektrische Maschine weist einen Statorwicklungssatz mit mindestens drei Statorwicklungen auf, wobei der Statorwicklungssatz typischerweise von einer zugehörigen Umrichtereinheit gespeist wird. Die Rotorwinkelposition einer solchen rotierenden elektrischen Maschine wird heute hauptsächlich durch Drehgeber bestimmt, der die gewünschte Rotorwinkelposition, d.h. die Winkelposition des Rotors bei dessen Drehung bzw. den magnetischen Flusswinkel, liefert. Die Kenntnis über die Position des Rotors bzw. der Position des magnetischen Flussvektors wird typischerweise zur Regelung der rotierende Maschine als eine von gängigerweise mehreren Eingangsgrössen benötigt. Drehgeber sind aber sehr anfällig gegen mechanische Beanspruchung und fallen demnach oft aus oder liefern fehlerhafte Rotorwinkelpositionswerte. Zudem ist die Montage aufwendig, da der Drehgeber selbst und zudem die Verkabelung an der Maschine angebracht werden muss, was arbeits- und kostenintensiv ist. Ferner muss ein solcher Drehgeber stets gewartet werden, was zusätzlichen Aufwand bedeutet.

**Darstellung der Erfindung**

Aufgabe der Erfindung ist es deshalb, ein Verfahren zum Bestimmen der Rotorwinkelposition einer rotierenden elektrischen Maschine anzugeben, welches sehr einfach realisierbar und robust ist und ohne Drehgeber auskommt. Diese Aufgabe wird durch die Merkmale des Anspruchs 1 gelöst. In den abhängigen Ansprüchen sind vorteilhafte Weiterbildungen der Erfindung angegeben.

Beim erfindungsgemässen Verfahren zum Bestimmen der Rotorwinkelposition einer rotierenden elektrischen Maschine weist die Maschine einen Statorwicklungssatz mit mindestens drei Statorwicklungen auf, wobei der Statorwicklungssatz von einer zugehörigen Umrichtereinheit gespeist wird. Nach der Erfindung wird dann eine erste Spannung mittels der Umrichtereinheit an den Statorwicklungssatz innerhalb eines ersten vorgebbaren Zeitraum angelegt wird und dazu ein erster Stromgradient ermittelt und eine zweite Spannung mittels der Umrichtereinheit an den Statorwicklungssatz innerhalb des ersten vorgebbaren Zeitraum angelegt und dazu dann ein zweiter Stromgradient ermittelt. Das Anlegen der ersten und zweiten Spannung erfolgt innerhalb des ersten vorgebbaren Zeitraums insbesondere zeitlich nacheinander. Zudem wird eine dritte Spannung mittels der Umrichtereinheit an den Statorwicklungssatz innerhalb eines zweiten vorgebbaren Zeitraum angelegt und dazu ein dritter Stromgradient ermittelt und eine vierte Spannung mittels der Umrichtereinheit an den Statorwicklungssatz innerhalb des zweiten vorgebbaren Zeitraum angelegt und dazu ein vierter Stromgradient ermittelt. Das Anlegen der dritten und vierten Spannung erfolgt innerhalb des zweiten vorgebbaren Zeitraums insbesondere zeitlich nacheinander. Aus dem ersten, zweiten, dritten und vierten Stromgradient wird dann ein Teilrotorpositionswinkel ermittelt. Ferner wird die Statorspannung am Statorwicklungssatz und der Statorstrom am Statorwicklungssatz fortlaufend ermittelt und aus der Statorspannung und dem Statorstrom ein erstes Statorflusssignal berechnet und aus dem Statorstrom und einem Magnetisierungsfluss des Statorwicklungssatzes ein zweites Statorflusssignal berechnet. Desweiteren wird die Cosinuswinkelfunktion des ersten Statorflusssignals und des zweiten Statorflusssignals sowie die Differenz aus der Cosinuswinkelfunktion des ersten Statorflusssignals und der Cosinuswinkelfunktion des zweiten Statorflusssignals gebildet. Falls nun die Differenz ausserhalb eines einstellbaren Toleranzbandes liegt, wird ein Korrekturphasenwinkel zum Teilrotorpositionswinkel addiert. Liegt die Differenz hingegen innerhalb des Tolleranzbandes, so wird demzufolge kein Korrekturphasenwinkel addiert und die gesuchte Rotorwinkelposition ist dann der Teilrotorpositionswinkel. Die Bestimmung der Rotorwinkelposition einer rotierenden elektrischen Maschine gemäss dem erfindungsgemässen Verfahren ist somit vorteilhaft ohne Drehgeber mit all seinen Nachteilen möglich, so dass insgesamt ein sehr einfach zu realisierendes und robustes Verfahren zur Bestimmung der Rotorwinkelposition einer rotierenden elektrischen Maschine erreicht ist.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

**Kurze Beschreibung der Zeichnungen**

Es zeigt:

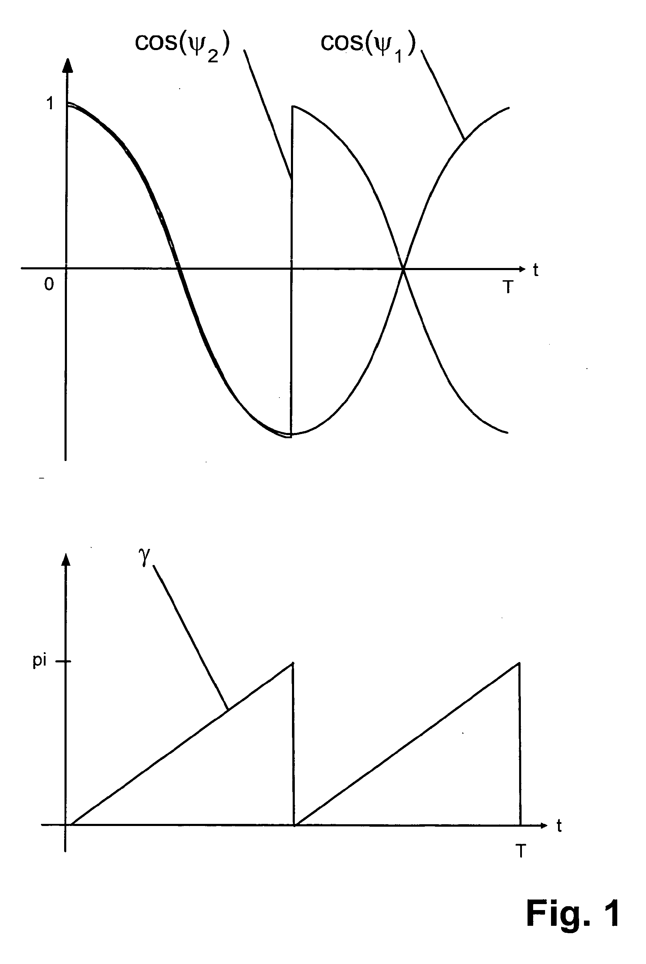

Fig. 1    Zeitliche Verläufe der Cosinuswinkelfunktion eines ersten und zweiten Statorflussignals der rotierenden elektrischen Maschine sowie ein zeitlicher Verlauf eines Teilrotorpositionswinkels beim erfindungsgemässen Verfahren.

Grundsätzlich sind in der Figur gleiche Teile mit gleichen Bezugszeichen versehen.

**Wege zur Ausführung der Erfindung**

Beim erfindungsgemässen Verfahren zum Bestimmen der Rotorwinkelposition einer rotierenden elektrischen Maschine, weist die Maschine einen Statorwicklungssatz mit mindestens drei Statorwicklungen auf, wobei der Statorwicklungssatz von einer Umrichtereinheit gespeist wird. Zunächst wird eine erste Spannung $U_1$ mittels der Umrichtereinheit an den Statorwicklungssatz innerhalb eines ersten vorgebbaren Zeitraum $t_{x1}$ angelegt wird und dazu ein erster Stromgradient $\left.\frac{di}{dt}\right|_{U_1}$ ermittelt. Bei der ersten Spannung $U_1$ handelt es sich um einen Spannungsvektor mit einem vorgegebenen Winkel $\alpha$. Weiterhin wird eine zweite Spannung $U_2$ mittels der Umrichtereinheit an den Statorwicklungssatz innerhalb des ersten vorgebbaren Zeitraum $t_{x1}$ angelegt und dazu ein zweiter Stromgradient $\left(\left.\frac{di}{dt}\right|_{U2}\right)$ ermittelt. Bei der zweiten Spannung $U_2$ handelt es sich um einen Spannungsvektor mit einem vorgegebenen Winkel $-\alpha$. Das Anlegen der ersten und zweiten Spannung $U_1$, $U_2$ erfolgt innerhalb des ersten vorgebbaren Zeitraums insbesondere zeitlich nacheinander. Ferner wird eine dritte Spannung $U_3$ mittels der Umrichtereinheit an den Statorwicklungssatz innerhalb eines zweiten vorgebbaren Zeitraum $t_{x2}$ angelegt und dazu ein dritter Stromgradient $\left.\frac{di}{dt}\right|_{U3}$ ermittelt. Bei der dritten Spannung $U_3$ handelt es sich um einen Spannungsvektor mit einem vorgegebenen Winkel $\beta$. Zudem wird eine vierte Spannung $U_4$ mittels der Umrichtereinheit an den Statorwicklungssatz innerhalb des zweiten vorgebbaren Zeitraum $t_{x2}$ angelegt und dazu ein vierter Stromgradient $\left.\frac{di}{dt}\right|_{U4}$ ermittelt. Bei der vierten Spannung $U_4$ handelt es sich um einen Spannungsvektor mit einem vorgegebenen Winkel $-\beta$. Die Ermittlung der Stromgradienten $\left.\frac{di}{dt}\right|_{U_1}$, $\left.\frac{di}{dt}\right|_{U_2}$, $\left.\frac{di}{dt}\right|_{3}$, $\left.\frac{di}{dt}\right|_{U_4}$ erfolgt vorzugsweise jeweils durch entsprechende Messung. Vorzugsweise ist der erste vorgebbare Zeitraum $t_{x1}$ gleich lang wie der zweite vorgebbare Zeitraum $t_{x2}$. Der erste vorgebbare Zeitraum $t_{x1}$ und der zweite vorgebbare Zeitraum $t_{x2}$ wird zudem mit Vorteil in Abhängigkeit von Maschineninduktivitäten, wie beispielsweise der Statorstreuinduktivität $L_{So}$, gewählt.

Aus dem ersten, zweiten, dritten und vierten Stromgradient $\left.\frac{di}{dt}\right|_{U_1}$, $\left.\frac{di}{dt}\right|_{U_2}$, $\left.\frac{di}{dt}\right|_{3}$, $\left.\frac{di}{dt}\right|_{U_4}$ wird danach ein Teilrotorpositionswinkel $\gamma$ ermittelt. Die Ermittlung des Teilrotorpositionswinkels $\gamma$ erfolgt vorzugsweise durch Berechnung gemäss folgender Formel

$$\gamma = \arctan\left(\frac{\mathrm{Re}\left(e^{-j\alpha}\cdot\left(\left.\frac{di}{dt}\right|_{U_1} - \left.\frac{di}{dt}\right|_{U_2}\right)\right) - \mathrm{Re}\left(e^{-j\beta}\cdot\left(\left.\frac{di}{dt}\right|_{U_3} - \left.\frac{di}{dt}\right|_{U_4}\right)\right)}{\mathrm{Im}\left(e^{-j\alpha}\cdot\left(\left.\frac{di}{dt}\right|_{U_1} - \left.\frac{di}{dt}\right|_{U_2}\right)\right) - \mathrm{Im}\left(e^{-j\beta}\cdot\left(\left.\frac{di}{dt}\right|_{U_3} - \left.\frac{di}{dt}\right|_{U_4}\right)\right)}\right)\cdot(-0.5)$$

In Fig. 1 ist dazu ein zeitlicher Verlauf des Teilrotorpositionswinkels γ gezeigt. Auf die weiteren zeitlichen Verläufe in Fig. 1 wird nachfolgend noch detailliert eingegangen. Gemäss dem Verlauf des Teilrotorpositionswinkels γ nach Fig. 1 gibt der Teilrotorpositionswinkel γ lediglich eine Winkelposition zwischen 0 und π an, d.h. in einer Vierquadrantendarstellung nur im ersten und zweiten Quadranten. Möglich sind aber sämtliche Winkelpositionen zwischen 0 und 2π, d.h. alle vier Quadranten der Vierquadrantendarstellung. Damit sämtliche Winkelpositionen bestimmt werden können, wird zunächst die Statorspannung $U_S$ am Statorwicklungssatz und der Statorstrom $I_S$ am Statorwicklungssatz fortlaufend ermittelt und aus der Statorspannung $U_S$ und dem Statorstrom $I_S$ ein erstes Statorflussignal $\psi_1$ berechnet und aus dem Statorstrom $I_s$ und einem Magnetisierungsfluss $\psi_M$ des Statorwicklungssatzes ein zweites Statorflussignal $\psi_2$ berechnet. Das erste Statorflussignal $\psi_1$ berechnet sich nach folgender Formel

$$\underline{\psi_1} = \int (\underline{U_S} - R_S \cdot \underline{I_S}) dt = \psi_{1x} + j\psi_{1y},$$

wobei $R_S$ der typischerweise aus den Maschinendaten bekannte ohmsche Statorwicklungswiderstand ist und das erste Statorflussignal $\psi_1$ als komplexe Grösse $\underline{\psi_1}$ mit ihrer zugehörigen x-Koordinate $\psi_{1x}$ und ihre zugehörigen y-Koordinate $\psi_{1y}$ in einem xy-Statorbezugssystem ist. Insbesondere wird das erste Statorflussignal $\psi_1$ gemäss vorstehend genannter Formel zusätzlich aus dem Statorwiderstand $R_S$ berechnet.

Auf die Berechnung des zweiten Statorflussignals $\psi_2$ wird nachfolgend detailliert eingegangen. Da das zweite Statorflussignal $\psi_2$ nach Parks im Rotorbezugssystem berechnet wird, wird zunächst der gemessene Statorstrom $I_S$ ins Rotorbezugssystem überführt:

$$I_{sd} = I_{sx} \cdot \cos(\gamma) + I_{sy} \cdot \sin(\gamma)$$

$$I_{sq} = I_{sy} \cdot \cos(\gamma) - I_{sx} \cdot \sin(\gamma)$$

Das zweite Statorflussignal $\psi_2$ als Park-Transformierte lässt sich wie folgt schreiben:

$$\psi_{2d} = \psi_{md} + i_{sd} \cdot L_{s\sigma}$$

$$\psi_{2q} = \psi_{mq} + i_{sq} \cdot L_{s\sigma}$$

Das zweite Statorflussignal $\psi_2$ im xy-Statorbezugssystem lässt sich dann wie folgt schreiben:

$$\psi_{2x} = \psi_{2d} \cdot \cos(\gamma) + \psi_{2q} \cdot \sin(\gamma)$$

$$\psi_{2y} = \psi_{2q} \cdot \cos(\gamma) + \psi_{2d} \cdot \sin(\gamma)$$

wobei

$$\underline{\psi_2} = \psi_{2x} + j\psi_{2y}$$

ist und $\psi_{md}$ die d-Komponente der Park-Transformierten des Statormagnetisierungsflusses des Statorwicklungssatzes, welcher Statormagnetisierungsfluss als bekannte oder bereitgestellte Grösse vorausgesetzt wird, $\psi_{mq}$ die q-Komponente der Park-Transformierten des Statormagnetisierungsflusses, $I_{Sd}$ die d-Komponente der Park-Transformierten des Statorstromes $I_S$, $I_{Sq}$ die q-Komponente der Park-Transformierten des Statorstromes $I_S$ und $L_{So}$ die aus den Maschinendaten bekannte Statorstreuinduktivität ist. Weiterhin ist das zweite Statorflussignal $\psi_2$ in vorstehend genannter Formel als komplexe Grösse $\underline{\psi}_2$ mit ihrer zugehörigen x-Koordinate $\psi_{2x}$ und ihre zugehörigen y-Koordinate $\psi_{2y}$ im xy-Statorbezugssystem dargestellt. Es sei erwähnt, dass die vorstehend genannte Park-Transformation dem Fachmann hinreichend bekannt ist. Insbesondere wird das zweite Statorflussignal $\psi_2$ gemäss vorstehend genannter Formel zusätzlich aus der Statorstreuinduktivität $L_{So}$ berechnet.

Nach der Erfindung wird dann die Cosinuswinkelfunktion des ersten Statorflussignals $\psi_1$ und des zweiten Statorflussignals $\psi_2$ gebildet, wobei dabei auf Fig. 1 verwiesen wird, in der neben dem bereits erwähnten zeitlichen Verlauf des Teilrotorpositionswinkels $\gamma$ auch der zeitliche Verlauf der Cosinuswinkelfunktion des ersten und zweiten Statorflussignals $\psi_1$, $\psi_2$ der rotierenden elektrischen Maschine dargestellt ist. Da das zweite Statorflussignal $\psi_2$ nach vorstehend genannter Formel vom Teilrotorpositionswinkel $\gamma$ abhängig ist und der Teilrotorpositionswinkel $\gamma$, wie bereist erwähnt, eine Winkelposition zwischen 0 und $\pi$ angibt, ergibt sich ein entsprechender zeitlicher Verlauf der Cosinuswinkelfunktion des zweiten Statorflussignals $\psi_2$. Nach der Erfindung wird ferner die Differenz aus der Cosinuswinkelfunktion des ersten Statorflussignals $\psi_1$ und der Cosinuswinkelfunktion des zweiten Statorflussignals $\psi_2$ gebildet und ein Korrekturphasenwinkel $\psi_K$ zum Teilrotorpositionswinkel $\gamma$ addiert.

Liegt die Differenz der Cosinuswinkelfunktionen der beiden Statorflussignale $\psi_1$ und $\psi_2$ innerhalb des Tolleranzbandes, so wird angenommen, dass der Teilrotorpositionswinkel $\gamma$ der gesuchten Rotorwinkelposition entspricht. Falls nun die gebildete Differenz der Cosinuswinkelfunktionen der beiden Statorflussignale $\psi_1$ und $\psi_2$ ausserhalb des einstellbaren Toleranzbandes liegt, wird angenommen, dass der Sprung des Teilrotorpositionswinkels $\gamma$ von 0 nach $\pi$ bzw. von TT nach 0 vorliegt und der Korrekturphasenwinkel $\psi_K$ wird entsprechend addiert. Vorzugsweise ist der Korrekturphasenwinkel $\psi_K$ $\pi$. Das Ergebnis der Addition ist dann die gesuchte Rotorwinkelposition. Die Bestimmung der Rotorwinkelposition ist somit vorteilhaft ohne Drehgeber mit all seinen Nachteilen möglich, so dass insgesamt ein sehr einfach zu realisierendes und robustes Verfahren zur Bestimmung der Rotorwinkelposition einer rotierenden elektrischen Maschine erzielt ist.

**Patentansprüche**

1.  Verfahren zum Bestimmen der Rotorwinkelposition einer rotierenden elektrischen Maschine, welche Maschine einen Statorwicklungssatz mit mindestens drei Statorwicklungen aufweist,
    bei dem der Statorwicklungssatz von einer Umrichtereinheit gespeist wird,
    **dadurch gekennzeichnet,**
    **dass** eine erste Spannung ($U_1$) mittels der Umrichtereinheit an den Statorwicklungssatz innerhalb eines ersten

    vorgebbaren Zeitraum ($t_{x1}$) angelegt wird und dazu ein erster Stromgradient $\left(\left.\dfrac{di}{dt}\right|_{U_1}\right)$ ermittelt wird und eine zweite

    Spannung ($U_2$) mittels der Umrichtereinheit an den Statorwicklungssatz innerhalb des ersten vorgebbaren Zeitraum

    ($t_{x1}$) angelegt wird und dazu ein zweiter Stromgradient $\left(\left.\dfrac{di}{dt}\right|_{U2}\right)$ ermittelt wird, dass eine dritte Spannung ($U_3$)

    mittels der Umrichtereinheit an den Statorwicklungssatz innerhalb eines zweiten vorgebbaren Zeitraum ($t_{x2}$) angelegt

    wird und dazu ein dritter Stromgradient $\left(\left.\dfrac{di}{dt}\right|_{U3}\right)$ ermittelt wird und eine vierte Spannung ($U_4$) mittels der Umrich-

    tereinheit an den Statorwicklungssatz innerhalb des zweiten vorgebbaren Zeitraum ($t_{x2}$) angelegt wird und dazu ein

    vierter Stromgradient $\left(\left.\dfrac{di}{dt}\right|_{U4}\right)$ ermittelt wird, dass aus dem ersten, zweiten, dritten und vierten Stromgradient

    $\left(\left.\dfrac{di}{dt}\right|_{U_1}, \left.\dfrac{di}{dt}\right|_{U_2}, \left.\dfrac{di}{dt}\right|_{3}, \left.\dfrac{di}{dt}\right|_{U4}\right)$ ein Teilrotorpositionswinkel ($\gamma$) ermittelt wird,

    **dass** die Statorspannung ($U_S$) am Statorwicklungssatz und der Statorstrom ($I_S$) am Statorwicklungssatz fortlaufend ermittelt wird und aus der Statorspannung ($U_S$) und dem Statorstrom ($I_S$) ein erstes Statorflussignal ($\psi_1$) berechnet

wird und aus dem Statorstrom ($I_S$) und einem Magnetisierungsfluss ($\psi_M$) des Statorwicklungssatzes ein zweites Statorflussignal ($\psi_2$) berechnet wird,

**dass** die Cosinuswinkelfunktion des ersten Statorflussignals ($\psi_1$) und des zweiten Statorflussignals ($\psi_2$) gebildet wird,

**dass** die Differenz aus der Cosinuswinkelfunktion des ersten Statorflussignals ($\psi_1$) und der Cosinuswinkelfunktion des zweiten Statorflussignals ($\psi_2$) gebildet wird, und

**dass** ein Korrekturphasenwinkel ($\psi_K$) zum Teilrotorpositionswinkel ($\gamma$) addiert wird, falls die Differenz ausserhalb eines einstellbaren Toleranzbandes liegt.

2. Verfahren nach Anspruch 1, **dadurch gekennzeichnet, dass** der Korrekturphasenwinkel ($\psi_K$) $\pi$ ist.

3. Verfahren nach Anspruch 1 oder 2, **dadurch gekennzeichnet, dass** der erste vorgebbare Zeitraum ($t_{x1}$) gleich lang wie der zweite vorgebbare Zeitraum ($t_{x2}$) ist.

4. Verfahren nach einem der Ansprüche 1 bis 3, **dadurch gekennzeichnet, dass** der erste vorgebbare Zeitraum ($t_{x1}$) und der zweite vorgebbare Zeitraum ($t_{x2}$) in Abhängigkeit von Maschineninduktivitäten gewählt wird.

5. Verfahren nach einem der Ansprüche 1 bis 4, **dadurch gekennzeichnet, dass** das erste Statorflussignal ($\psi_1$) zusätzlich aus einem Statorwiderstand ($R_S$) berechnet wird.

6. Verfahren nach einem der Ansprüche 1 bis 5, **dadurch gekennzeichnet, dass** das zweite Statorflussignal ($\psi_2$) zusätzlich aus einer Statorstreuinduktivität ($L_{So}$) berechnet wird.

Fig. 1

**EP 1 901 421 A1**

Europäisches Patentamt

**EUROPÄISCHER RECHERCHENBERICHT**

Nummer der Anmeldung

EP 06 40 5391

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | SENJYU T ET AL: "Initial rotor position estimation of salient-pole brushless DC motors by artificial neural network" POWER CONVERSION CONFERENCE - NAGAOKA 1997., PROCEEDINGS OF THE NAGAOKA, JAPAN 3-6 AUG. 1997, NEW YORK, NY, USA,IEEE, US, Bd. 1, 3. August 1997 (1997-08-03), Seiten 145-150, XP010257297 ISBN: 0-7803-3823-5 * das ganze Dokument * ----- | 1-6 | INV. H02P6/18 H02P21/14 |
| Y | JOACHIM HOLTZ: "Sensorless Control of Induction Motor Drives" PROCEEDINGS OF THE IEEE, IEEE. NEW YORK, US, Bd. 90, Nr. 8, August 2002 (2002-08), XP011065049 ISSN: 0018-9219 * Seite 1367, rechte Spalte - Seite 1368, linke Spalte; Abbildung 11 * * Seite 1369; Abbildung 14 * ----- | 1-6 | |
| A | US 6 172 498 B1 (SCHMIDT PETER B [US] ET AL) 9. Januar 2001 (2001-01-09) * Zusammenfassung * * Spalte 11, Zeile 24 - Spalte 12, Zeile 63; Abbildungen 1,8-10 * ----- | 1-6 | RECHERCHIERTE SACHGEBIETE (IPC) H02P |

Der vorliegende Recherchenbericht wurde für alle Patentansprüche erstellt

| Recherchenort | Abschlußdatum der Recherche | Prüfer |
|---|---|---|
| München | 1. Februar 2007 | Zeng, Wenyan |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

# EP 1 901 421 A1

**ANHANG ZUM EUROPÄISCHEN RECHERCHENBERICHT
ÜBER DIE EUROPÄISCHE PATENTANMELDUNG NR.**

EP 06 40 5391

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-02-2007

| Im Recherchenbericht angeführtes Patentdokument | Datum der Veröffentlichung | Mitglied(er) der Patentfamilie | Datum der Veröffentlichung |
|---|---|---|---|
| US 6172498 B1 | 09-01-2001 | KEINE | |

Für nähere Einzelheiten zu diesem Anhang : siehe Amtsblatt des Europäischen Patentamts, Nr.12/82

EPO FORM P0461

10